Europäisches Patentamt

European Patent Office

Office européen des brevets

(19)

(11) Veröffentlichungsnummer: **0 339 239**
**A2**

(12) # EUROPÄISCHE PATENTANMELDUNG

(21) Anmeldenummer: **89104660.9**

(51) Int. Cl.4: **A23B 4/02**

(22) Anmeldetag: **16.03.89**

(30) Priorität: **25.04.88 CH 1545/88**

(43) Veröffentlichungstag der Anmeldung:
**02.11.89 Patentblatt 89/44**

(84) Benannte Vertragsstaaten:
**AT BE DE ES FR GB GR IT LU NL SE**

(71) Anmelder: **DORIT MASCHINEN-HANDELS-AG**
**Bahnhofstrasse 16**
**CH-8956 Killwangen(CH)**

(72) Erfinder: **Suhner, Beat**
**Hofmatt 4 a**
**CH-5452 Oberrohrdorf(CH)**

(74) Vertreter: **Fillinger, Peter, Dr.**
**Rütistrasse 1a**
**CH-5400 Baden(CH)**

(54) **Pökelinjector.**

(57) Um die geförderte Lakemenge möglichst klein zu halten sind Mittel vorhanden, die den Lakefluss zum Nadelrechen 3 entsprechend seiner Hubbewegung begrenzen.

EP 0 339 239 A2

## Pökelinjector

Die vorliegende Erfindung bezieht sich auf einen Pökelinjector gemäss dem Oberbegriff des Anspruchs 1.

Derartige Pökelinjectoren sind bekannt. Bei diesen bekannten Pökelinjectoren ist der Nadelrechen an einen unter Überdruck stehenden Lakekreislauf angeschlossen, wobei Massnahmen getroffen sind, dass jeweils Lake aus einer Injectionsnadel austritt, wenn sich diese im zu pökelnden Fleisch befindet. Die Umwälzung der Lake im Lakekreislauf unter Druck hat deren Erwärmung zur Folge. Zudem besteht eine latente Kontaminiationsgefahr.

Die vorliegende Erfindung stellt sich die Aufgabe, einen Pökelinjector der genannten Art derart zu verbessern, dass möglichst nicht mehr Lake gefördert als tatsächlich in das Fleisch eingespritzt wird.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert. Sie zeigt ein Lakeflussschema zu einem Pökelinjector.

Die Hinweisziffer 1 bezeichnet ein schrittweise antreibbares Förderband mit dem die Fleischstükke 2 einem auf und ab beweg baren Nadelrechen zugeführt werden. Die Injektionsnadeln 4 des Nadelrechens 3 sind in einem Joch 5 gelagert und zum Schutz gegen eine achsiale Überlastung federnd abgestützt. Jede der Injectionsnadeln 4 ist über ein Verteilrohr und eine Leitung 6 an eine Kammer 7 in einem Zylinder 8 angeschlossen. Die Leitung 6 ist mit einem Rückschlagventil 9 versehen, das einen Lakefluss zu den Injectionsnadeln 4 nicht aber einen Rückfluss gestattet. Im Zylinder 8 ist ein Kolben 10 achsial verschiebbar angeordnet, der den Zylinderinnenraum in die erwähnte Kammer 7 einerseits und in eine entlüftete Kammer 11 anderseits unterteilt. Der Kolben 10 ist mittels seiner Kolbenstange 12 an einem Gestänge 13 befestigt, welches seinerseits mit dem Joch 5 fest verbunden ist. Der Kolben 10 wird dadurch synchron mit dem Nadelrechen 3 bewegt und vollzieht eine entsprechende Hubbewegung.

Die erste Kammer 7 ist weiter durch eine Leitung 14 mit einer zweiten Kammer 15 in einem Zylinder 16 verbunden, die durch einen verschiebbaren Kolben 17 begrenzt ist. Der Kolben 17 sitzt fest auf einer Kolbenstange 18, die am unteren Ende als Rohr ausgebildet und mit radialen Überlauföffnungen 19 versehen ist. Nebst dem Kolben 17 sitzt auf der Kolbenstange 18 ein weiterer Kolben 20. Zwischen diesen befindet sich eine entlüftete Zylinderkammer 21. Der Kolben 20 begrenzt im Zylinder 16 eine pneumatische Druckkammer 22, die an eine pneumatische Druckquelle 23 konstanten, einstellbaren Drucks angeschlossen ist. Der in der Druckkammer 22 herrschende Druck bestimmt den Lakedruck in den Kammern 7 und 15 sowie in den Leitungen 6 und 14. Die Überlauföffnungen 19 sind mittels einer Leitung 24 an ein Lakereservoir 25 angeschlossen.

Wird der Nadelrechen 3 von einem nicht dargestellten Antrieb gehoben und gesenkt, so vollzieht der Kolben 10 einen entsprechenden Hubweg. In der Aufwärtsbewegung saugt er Lake aus der zweiten Kammer 15 in die Kammer 7, wobei die Lake unter dem durch das pneumatische Medium in der Kammer 22 vorgegebenen Druck steht. Dringt der Nadelrechen 3 in ein Fleischstück ein, fliesst die Lake aus der Kammer 7 einerseits zu den Nadeln 4 und, wenn ein Druckausgleich erforderlich ist, in die Kammer 15. Fliesst zu viel Lake von der Kammer 7 zur Kammer 15, schiebt sich die Überlauföffnung 19 in deren Bereich, worauf Lake in das Lakereservoir 25 abfliessen kann. Während jeder Abwärtsbewegung des Nadelrechens 3 wird somit mit konstantem, einstellbarem Druck Lake in das zu pökelnde Fleischstück injiziert. Ein Rückfluss der Lake aus der Kammer 7 über eine Leitung 26 in das Lakereservoir 25 ist wegen des darin angeordneten Rückschlagventils 27 ausgeschlossen.

Fällt während eines Aufwärtshubs des Kolbens 10 der Druck in der zweiten Kammer 15 zusammen, öffnet sich das Rückschlagventil 27 und die Lake wird vom Lakereservoir 25 direkt in die Kammer 7 gesaugt. Das Volumen der Kammer 7 muss so bemessen sein, dass die darin befindliche Lake für den grösstmöglichen Arbeitshub des Nadelrechens 3 zureicht.

Der bei der beschriebenen Vorrichtung eintretende Lakerückfluss ist vergleichsweise klein zu den heute üblichen Umwälzsystemen. Um diesen Rückfluss praktisch ganz zu beseitigen wird die Höhe der ankommenden Fleischstücke 2 durch einen Fühler 28 detektiert und von einem Kontaktgeber 29 einem Empfänger 30 signalisiert. Dieser steuert den Hubantrieb des Nadelrechens 3 derart, dass die Hubbewegung im wesentlichen nicht grösser ist, als dies die jeweilige Höhe der Fleischstücke erfordert.

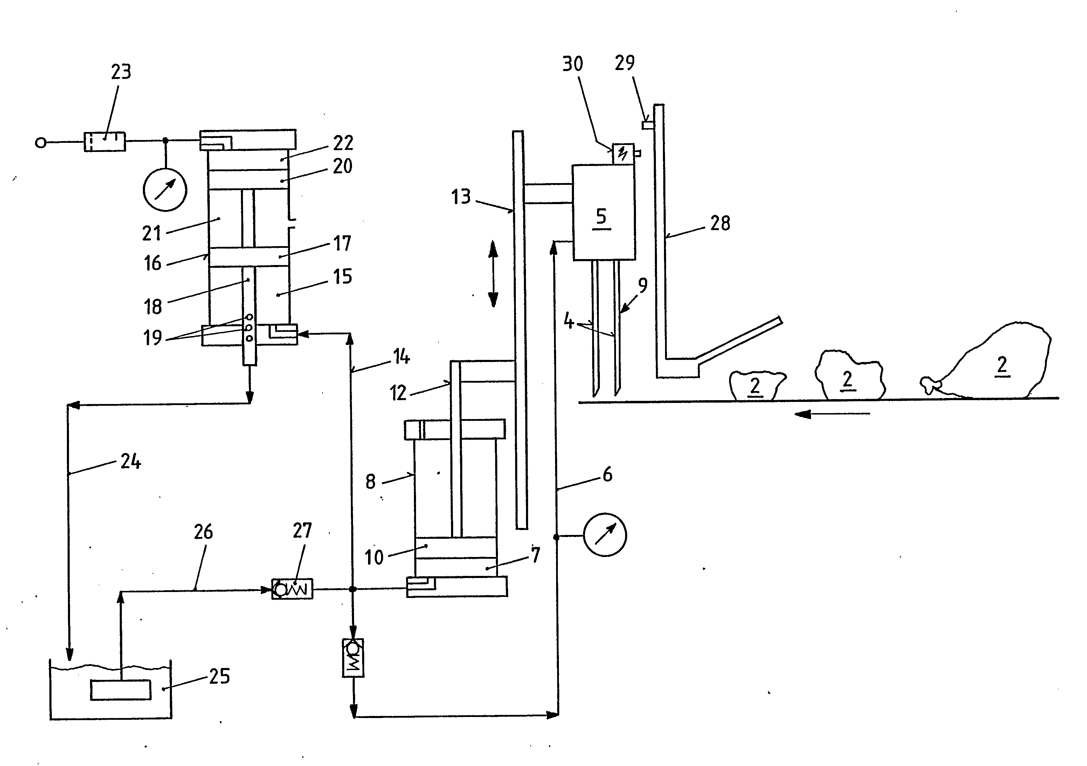

## Ansprüche

1. Pökelinjector mit einem an eine Lakedruckwelle angeschlossenen, längs einem Hubweg auf und ab bewegbaren Nadelrechen, dadurch gekennzeichnet, dass Mittel vorhanden sind, die den Lakefluss zum Nadelrechen (3) entsprechend seiner Hubbewegung begrenzen.

2. Pökelinjector nach Anspruch 1, dadurch gekennzeichnet, dass der Nadelrechen (3) fest mit einem die Hubbewegung mitmachenden Kolben (10) verbunden ist, der in einem Zylinder (8) eine Kammer (7) begrenzt, dass für den Lakefluss von der Kammer (7) zum Nadelrechen (3) eine Einwegeinrichtung (9) vorhanden ist, und dass die Kammer (7) mit einem Lakeausgleichsgefäss (15, 16, 17) verbunden ist, welches Mittel (21 bis 23) zum Konstanthalten eines einstellbaren Lakedrucks aufweist.

3. Pökelinjector nach Anspruch 2, dadurch gekennzeichnet, dass die Kammer (7) mit einem Lakereservoir (25) verbunden ist, und dass der Lakefluss vom Reservoir (25) zur Kammer (7) mit einer Einwegeinrichtung (27) verbunden ist.

4. Pökelinjector nach Anspruch 2, dadurch gekennzeichnet, dass das Ausgleichsgefäss (15, 16, 17) durch eine in einem Zylinder (16) angeordnete zweite Kammer (15) gebildet wird, welche durch eine nachgiebige Wand, vorzugsweise einen zweiten Kolben (17) begrenzt ist, die mit einer einstellbaren, gegen die Kammer (15) gerichteten Kraft beaufschlagbar ist.

5. Pökelinjector nach Anspruch 4, dadurch gekennzeichnet, dass die zweite Kammer (15) zur Volumenbegrenzung mit einer Überlauföffnung (19) versehen ist.

6. Pökelinjector nach Anspruch 5, dass die Überlauföffnung (19) an das Lakereservoir (25) durch eine Rückflussleitung (24) angeschlossen ist.

7. Pökelinjector nach einem der Ansprüche 4 bis 6, dadurch gekennzeichnet, dass die auf den zweiten Kolben (17) wirkende Kraft durch einen pneumatisch betätigbaren dritten Kolben (20) erzeugt wird.

8. Pökelinjector nach Anspruch 7, dadurch gekennzeichnet, dass der zweite und dritte Kolben (17, 20) zu einem Tamdemkolben zusammengefasst sind, und dass die zwischen den beiden Kolben liegende Zylinderkammer (21) entlüftet ist.

9. Pökelinjector nach einem der Ansprüche 1 bis 8, dadurch gekennzeichnet, dass der Hub des Nadelrechens (3) von einem die Höhe des Fleisches detektierenden Fühler (28) gesteuert ist.